# FASCICULE DE BREVET EUROPEEN

(11) **EP 2 262 577 B1**
(45) Date de publication et mention de la délivrance du brevet: **24.08.2016**
(21) Numéro de dépôt: 09729853.3
(22) Date de dépôt: 20.03.2009
(51) Int. Cl.: B01D 21/24, E02F 7/06, B08B 9/093, E21C 45/00, E21C 50/00, E02F 3/88, E02F 7/00, B01D 21/34, E21B 43/34, E21B 43/01, E21B 43/12

(54) **SEPARATEUR DESTINE A RECEVOIR UN FLUIDE SOUS PRESSION CONTENANT AU MOINS UN MATERIAU SOLIDE ET UN LIQUIDE**
ABSCHEIDER ZUM AUFNEHMEN EINES FLUIDS UNDER DRUCK WELCHES ZUMINDEST FESTSTOFF UND FLÜSSIGKEIT ENTHÄLT
SEPARATOR FOR RECEIVING A PRESSURIZED FLUID CONTAINING AS A MINIMUM A SOLID MATERIAL AND A LIQUID, AND ASSOCIATED DEVICE AND METHOD.

(30) Priorité: 21.03.2008 FR 0851864
(43) Date de publication de la demande: 22.12.2010
(73) Titulaire: Technip France, 92400 Courbevoie (FR)
(72) Inventeur: ESPINASSE, Philippe, F-76420 Bihorel (FR)
(74) Mandataire: Lavoix
(86) Numéro de dépôt international: PCT/FR2009/050478
(87) Numéro de publication internationale: WO 2009/125106

(56) Documents cités:
- WO-A-2005/099856
- WO-A2-2008/129292
- US-A- 4 162 973
- DATABASE WPI Week 199942 Thomson Scientific, London, GB; AN 1999-497017 XP002499906 & JP 11 207395 A (DI TECHNO KK) 3 août 1999 (1999-08-03)

## Description

La présente invention concerne un séparateur selon le préambule de la revendication 1.

Un tel séparateur est destiné à être connecté par exemple à la sortie d'une conduite de transport d'un fluide sous pression contenant du matériau solide divisé prélevé dans le fond d'une étendue d'eau, de l'eau sous pression, et du gaz sous pression.

La conduite de transport est par exemple disposée dans un dispositif d'extraction destiné à l'exploitation minière des fonds sous-marins, ou aux travaux de terrassement des sols sous-marins en vue de la mise en place d'une installation de production d'hydrocarbures.

On connaît de US 4,232,903 un dispositif d'extraction qui comprend une installation de surface portée par un navire, un ensemble de fond muni d'un véhicule sous-marin d'extraction de matériau solide, et une conduite de transport du matériau solide raccordant l'ensemble de fond à l'installation de surface.

Pour remonter les matériaux prélevés depuis le fond vers la surface, du gaz sous pression est convoyé depuis l'installation de surface vers un point intermédiaire de la conduite de transport en vue de son injection dans la conduite. Le mélange d'eau et de matériau solide présent dans la conduite est ainsi allégé au dessus du point d'injection de gaz, ce qui entraîne le fluide sous pression vers l'installation de surface.

Toutefois, ce convoyage nécessite de comprimer du gaz à une pression élevée pour l'injecter dans la colonne montante. Le navire doit donc porter un compresseur de grande taille, ce qui est peu économique et peu pratique.

Pour assurer une bonne productivité, il est en outre nécessaire de traiter en continu le fluide sous pression issu de la conduite de transport pour le séparer en un flux riche en matériau solide, en un flux liquide et en un flux gazeux, et de dépressuriser le flux riche en matériau solide pour son stockage sur le navire, sans avoir à interrompre la circulation de fluide dans la conduite de transport. WO 2005/099856 décrit un séparateur selon le préambule de la revendication 1.

Un but de l'invention est d'obtenir un séparateur pour un dispositif d'extraction qui permette à la fois de séparer en continu un fluide sous pression pour obtenir un flux dépressurisé riche en matériau solide, et de récupérer un flux pauvre en matériau solide sous pression, en vue de son recyclage dans le dispositif.

A cet effet, l'invention a pour objet un séparateur selon la revendication 1.

Le séparateur selon l'invention peut comprendre l'une ou plusieurs des caractéristique(s) des revendication 2 à 7.

L'invention a également pour objet un dispositif d'extraction d'un matériau situé au fond d'une étendue d'eau selon la revendication 8.

Le dispositif selon l'invention peut comprendre la caractéristique de la revendication 9.

Linvention a en outre pour objet un procédé selon la revendication 10.

L'invention sera mieux comprise à la description qui va suivre, donnée uniquement à titre d'exemple, et faite en se référant aux dessins annexés, sur lesquels :
- la Figure 1 est une vue schématique de côté d'un premier dispositif d'extraction selon l'invention, muni d'un séparateur continu ;
- la Figure 2 est une vue partiellement schématique en perspective du séparateur du dispositif d'extraction de la Figure 1 ;
- la Figure 3 est une vue de dessus du séparateur représenté sur la Figure 2 ;
- la Figure 4 est une vue en coupe suivant un plan vertical médian du séparateur de la Figure 2 dans une première configuration de séparation ; et
- la Figure 5 est une vue analogue à la Figure 4 dans une deuxième configuration de séparation.

Dans tout ce qui suit, les termes « amont » et « aval » s'entendent par rapport au sens normal de circulation d'un fluide.

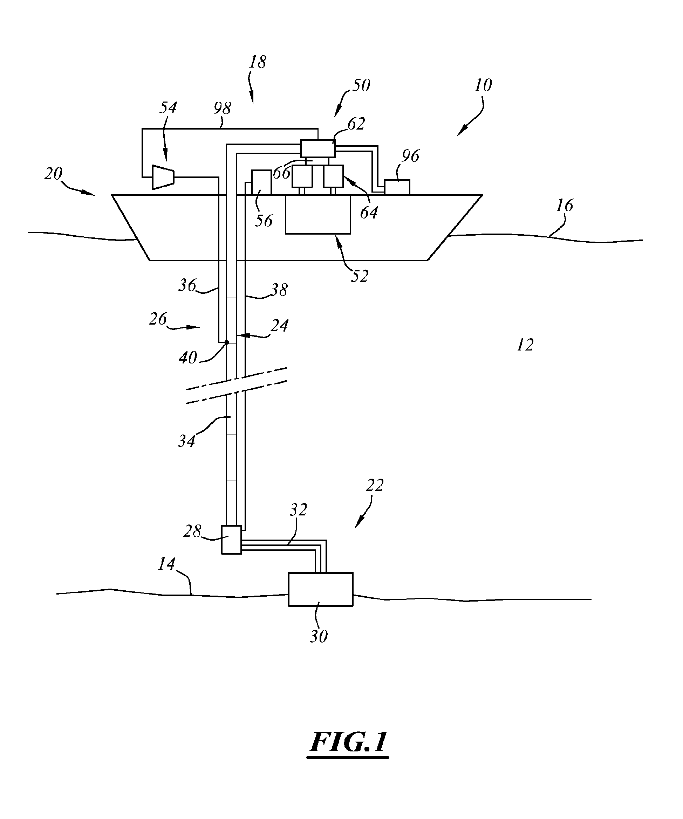

Un premier dispositif d'extraction 10 comprenant un séparateur selon l'invention est représenté sur les Figures 1 à 5.

Ce dispositif 10 est destiné à prélever des matériaux solides situés au fond d'une étendue d'eau 12 comme une mer, une océan ou un lac.

L'étendue d'eau 12 repose sur un fond 14 délimité par du matériau solide comprenant des roches ou/et des sédiments.

Le dispositif d'extraction 10 a pour objet de réaliser par exemple des travaux de terrassement sur le fond 14 en vue de la mise en place d'une installation d'exploitation d'hydrocarbures, ou de prélever des minerais déposés sur le fond 14, en vue de leur exploitation ultérieure à la surface 16 de l'étendue d'eau 12.

Le dispositif d'extraction 10 est par exemple du type décrit dans les demandes françaises n°07 56579 et n° 07 56718 de la Demanderesse.

Le dispositif 10 d'extraction comprend ainsi une installation de surface 18 portée par un ensemble flottant 20 sur l'étendue d'eau, un ensemble de fond 22 pour le prélèvement du matériau solide sur le fond 14 de l'étendue d'eau 12, et une conduite de transport 24 pour convoyer le matériau prélevé depuis l'ensemble de fond 22 vers l'installation de surface 18. Le dispositif 10 comprend en outre des lignes fonctionnelles 26 s'étendant dans l'étendue d'eau 12 le long de la conduite de transport 24 depuis l'installation de surface 18.

L'ensemble flottant 20 est formé par un navire ou une barge. En variante, il est formé par une plateforme flottant sur l'étendue d'eau.

L'ensemble de fond 22 comprend une station de base 28 fixée à l'extrémité inférieure de la conduite 24, des moyens 30 de prélèvement du matériau sur le fond 14, et un lien flexible 32 pour convoyer le matériau prélevé depuis les moyens de prélèvement 30 vers la station de base 28.

Les moyens de prélèvement 30 sont par exemple portés par un véhicule excavateur mobile sur le fond 14.

En variante, les moyens de prélèvement 30 comprennent une grue actionnée depuis l'ensemble flottant 20 et un support de réception et de traitement du matériau, le support étant posé sur le fond 14.

La conduite de transport 24 s'étend entre la station de base 28 située au voisinage du fond 14 et l'installation de surface 18 située sur l'ensemble flottant 20. La longueur de la conduite, prise entre l'installation de surface 18 et l'ensemble de fond 28 est par exemple comprise entre quelques mètres et plus de 1000 m.

La conduite de transport 24 est par exemple formée par un assemblage de tubes rigides. En variante, elle est formée par un conduit flexible sur sensiblement toute sa longueur.

Le lien flexible 32 et la conduite de transport 24 délimitent intérieurement un passage 34 continu de circulation du matériau solide, mélangé avec de l'eau entre les moyens de prélèvement 30 sur le fond de l'étendue d'eau et l'installation de surface 18.

Les lignes fonctionnelles 26 comprennent une ligne 36 d'injection de gaz dans le passage de circulation 34 et des lignes 38 d'alimentation électrique et de commande des moyens de prélèvement 30.

Dans l'exemple représenté sur la Figure 1, le mélange d'eau et de matériau solide dans le passage 34 est entraîné depuis le fond 14 vers l'installation de surface 18 par puisage au gaz (désigné par le terme anglais « gas-lift »).

A cet effet, la ligne 36 s'étend entre l'installation de surface 18 et un point intermédiaire 40 de la conduite de transport 24 pour injecter dans le passage 34 du gaz sous pression au niveau du point intermédiaire 40. La pression du gaz injecté est supérieure à la pression atmosphérique et par exemple comprise entre 10 bars et 100 bars.

Ainsi, l'injection de gaz au point 40 forme, en aval de ce point 40 dans le passage 34, un fluide sous pression contenant le matériau solide divisé, l'eau liquide et le gaz sous pression. Ce fluide sous pression est allégé par rapport au fluide situé sous le point 40, ce qui provoque l'entraînement vers le haut de ce fluide.

Comme illustré par la Figure 1, l'installation de surface 18 comprend un séparateur 50 selon l'invention, raccordé à une extrémité supérieure aval de la conduite de transport 28, et une cuve 52 de stockage du matériau solide à pression atmosphérique, reliée hydrauliquement au séparateur 50. L'installation de surface 18 comprend en outre un compresseur 54 pour l'alimentation de la ligne d'injection de gaz 36 et des moyens 56 de commande et d'alimentation électrique pour l'alimentation des lignes 38.

Le séparateur 50 est destiné à séparer le fluide sous pression reçu en continu de la conduite 24, pour former un flux riche en matériau solide afin de le dépressuriser, et pour former un flux gazeux pauvre en matériau solide formé par le gaz présent dans le fluide sous pression pour récupérer ce gaz sans décompression substantielle afin le réinjecter dans le compresseur 54. En outre, le séparateur 50 produit un flux liquide pauvre en matériau solide à partir du fluide sous pression, ce flux étant formé par l'eau sous pression présente dans le fluide.

Le flux riche en matériau solide est formé par la quasi-totalité du matériau solide divisé aggloméré et par l'eau présente dans les interstices entre les morceaux de matériau solide.

Comme illustré par les Figures 1 à 5, le séparateur 50 comprend un réducteur de vitesse 60 du matériau solide contenu dans le fluide sous pression, un caisson 62 pressurisé de réception continue du fluide sous pression pour obtenir le flux riche en matériau solide, le flux liquide et le flux gazeux.

Le séparateur 50 comprend en outre une pluralité de bacs 64 de récupération et de dépressurisation du flux riche en matériau solide, un distributeur sélectif 66 d'envoi du flux riche en matériau solide dans les bacs 64 et des moyens de commande 68 du distributeur.

Le caisson pressurisé 62, le distributeur 66 et les bacs de dépressurisation 64 sont montés de haut en bas sur un châssis 74 prévu sur une plateforme 76 de l'ensemble flottant 20.

Le caisson 62 comprend une paroi inférieure 78 en forme de trémie, une paroi intermédiaire 80 sensiblement cylindrique d'axe vertical B-B' et une paroi d'obturation supérieure en forme de cône tronqué 82.

Les parois 78, 80, 82 délimitent intérieurement un volume fermé 84 de réception du fluide sous pression, destiné à être maintenu à une pression supérieure à la pression atmosphérique par le fluide sous pression.

Le caisson 62 comprend en outre une entrée amont 86 d'injection de fluide sous pression dans le volume 84, une sortie aval 88 d'évacuation du flux d'eau sous pression hors du volume 84, une sortie supérieure 90 d'évacuation du flux de gaz sous pression hors du volume 84, et une sortie inférieure 92 d'évacuation du flux riche en matériau solide hors du volume 84.

L'entrée amont 86 et la sortie aval 88 sont ménagées horizontalement dans la paroi intermédiaire 80 du caisson 62, à l'opposé l'une de l'autre.

L'entrée d'injection 86 est raccordée à la conduite de transport 24.

La sortie 88 d'évacuation d'eau sous pression est munie d'une grille 93 de filtration et d'un régulateur de pression 94 dans le volume intérieur 84. Elle est raccordée, en aval du régulateur 94, à un stockage 96 d'eau pressurisé, ou alternativement à des moyens de dépressurisation de l'eau, si l'eau doit être récupérée à pression atmosphérique, par exemple pour laver le matériau solide présent ou convoyé dans les cuves de stockage 52.

La sortie supérieure 90 d'évacuation de gaz est raccordée au compresseur 54 par une conduite d'alimentation en gaz pressurisé 98.

La sortie inférieure 92 est délimitée à l'extrémité inférieure de la paroi inférieure 78. Elle présente une section sensiblement circulaire et débouche en regard du distributeur 66.

Le réducteur de vitesse 60 est placé dans le caisson 62, en regard de l'entrée d'injection 86. Il comprend des organes transversaux 99 de ralentissement du matériau solide qui font saillie dans le volume intérieur 84, perpendiculairement à l'axe A-A' horizontal d'injection du fluide sous pression à travers l'entrée 86.

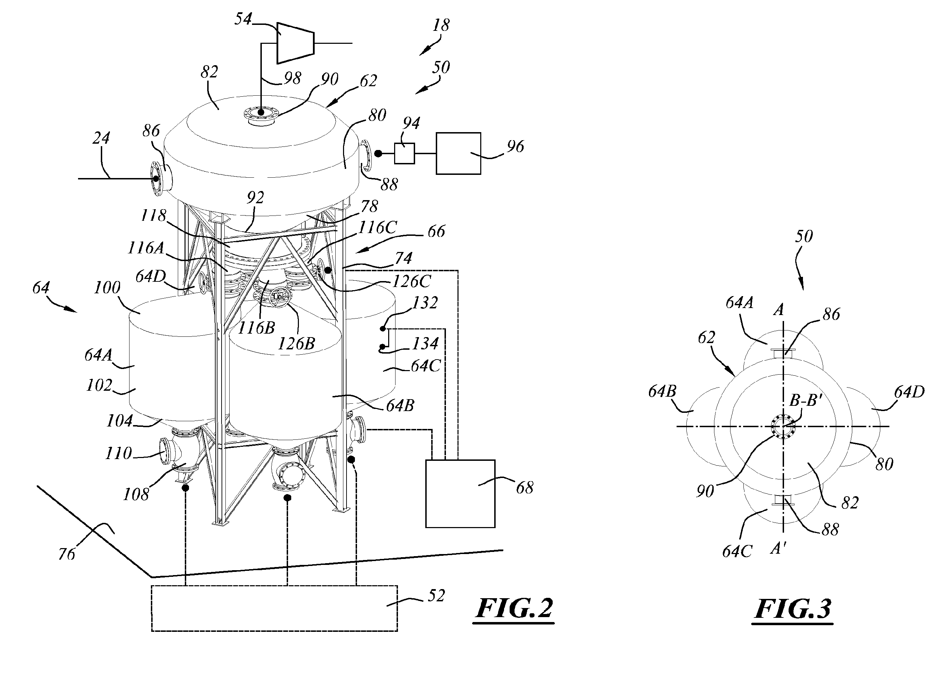

Dans l'exemple représenté sur la Figure 2, les organes transversaux 99 sont formés par un rideau de chaînes ou de barres fixées à leur extrémité supérieure sur la paroi supérieure 82.

Le réducteur 60 diminue la vitesse du matériau solide dans le fluide sous pression pour éviter l'endommagement des parois du caisson 62 lors de l'injection du fluide sous pression.

Les bacs de dépressurisation 64 sont répartis autour de l'axe central vertical A-A' du caisson de réception 62.

Dans l'exemple représenté sur la Figure 2, le séparateur 50 comprend quatre bacs 64A à 64D de structures identiques, disposés verticalement autour de l'axe B-B' sous le caisson 62 et sous le distributeur 66.

Chaque bac 64A à 64D est de forme généralement cylindrique d'axe vertical parallèle à l'axe B-B'.

Chaque bac 64A à 64D comprend ainsi une paroi supérieure 100 d'obturation, de section verticale convergente vers le haut, une paroi cylindrique intermédiaire 102, et une paroi inférieure 104 de section convergente vers le bas.

Les parois 100, 102 et 104 délimitent un espace intérieur 105 fermé.

Il comprend en outre une entrée d'introduction 106 d'une partie du flux riche en matériau solide dans l'espace 105, ménagée au sommet de la paroi supérieure 100, et une sortie 108 de dépressurisation et d'évacuation du flux riche en matériau solide hors de l'espace 105, ménagée dans le bas de la paroi inférieure 104.

L'entrée d'introduction 106 débouche verticalement sous le distributeur 66.

La sortie de dépressurisation 108 débouche vers le bas sous l'entrée 106. Elle est munie d'une vanne 110 de dépressurisation pilotable entre une configuration d'ouverture autorisant la circulation du matériau solide à travers la sortie 108 et une configuration de fermeture interdisant la circulation du matériau solide à travers l'ouverture 108.

La sortie 108 est raccordée à une région soumise à la pression atmosphérique, formée dans cet exemple par la cuve de stockage 52 à pression atmosphérique du matériau solide dépressurisé.

La vanne de dépressurisation 110 est raccordée aux moyens de commande 68 pour son pilotage.

Le distributeur 66 comprend, pour chaque bac 64A à 64D, un conduit individuel d'alimentation 116A à 116D, un barillet 118 rotatif de distribution du flux riche en solide dans les conduits individuels 116A à 116D, monté rotatif dans un support cylindrique 120.

Chaque conduit individuel d'alimentation 116A à 116D s'étend entre une ouverture supérieure 122 située en regard du barillet 118 et une ouverture inférieure 124 munie d'une vanne d'isolation du bac 126A à 126D, raccordée sur l'entrée d'introduction 106 du bac 64A à 64D. Chaque conduit 116A à 116B raccorde le barillet 118 à exclusivement un bac respectif 64A à 64D.

Chaque vanne 126A à 126D est pilotable graduellement entre une configuration totalement ouverte dans laquelle le conduit individuel 116A à 116D est raccordé au bac 64A à 64D associé et une configuration totalement obturée dans laquelle le bac 64A à 64D est isolé du conduit 116A à 116D.

Chaque vanne 126A à 126D est raccordée aux moyens de commande 68 pour son pilotage.

Le support 120 s'étend sous la cuve 62 dans le prolongement inférieur de la sortie inférieure 92.

Le barillet 118 est monté rotatif autour de l'axe vertical B-B' dans le support 120. Il comprend deux entonnoirs 130 disposés côte à côte de part et d'autre d'un plan vertical passant par l'axe B-B'.

Chaque entonnoir 130 délimite un canal 131 débouchant en amont en regard de la sortie inférieure 92 et propre à déboucher en aval exclusivement en regard de l'ouverture supérieure 122 d'un conduit 116A à 116D.

Le barillet 118 est ainsi mobile en rotation autour de l'axe B-B' entre une première position d'alimentation du premier bac 64A et du deuxième bac 64C et d'isolation du deuxième bac 64B et du quatrième bac 64D, et une deuxième position d'alimentation du deuxième bac 64B et du quatrième bac 64D et d'isolation du premier bac 64A et du deuxième bac 64C.

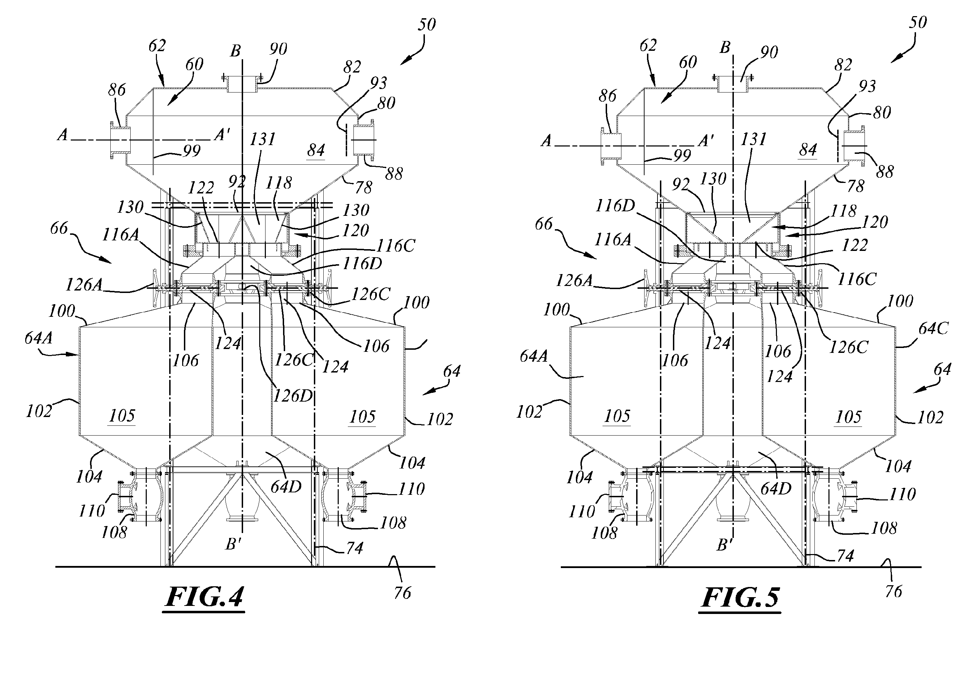

Dans la première position représentée sur la Figure 4, les entonnoirs 130 débouchent en amont vers le haut en regard de la sortie 92, et en aval vers le bas en regard des ouvertures supérieures 122 des conduits d'alimentation 116A, 116C respectifs du premier bac 64A et du troisième bac 64C.

Les entonnoirs 130 masquent en outres les ouvertures supérieures 122 des conduits d'alimentation 116B, 116D du deuxième bac 64B et du quatrième bac 64D.

Ainsi, dans la première position du barillet 118, le flux riche en matériau solide est apte à s'écouler depuis le volume intérieur 84 vers le premier bac 64A et vers le troisième bac 64C à travers successivement les entonnoirs 130, les conduites individuelles 116A, 116C, et les vannes 126A, 126C.

Dans cette position, le barillet 118 empêche le flux riche en matériau solide de circuler depuis le volume intérieur 84 vers le deuxième bac 64B et le quatrième bac 64D.

Au contraire, dans la deuxième position représentée sur la Figure 5, le barillet 118 a pivoté de 90° environ autour de l'ax e B-B'. Les entonnoirs 130 sont disposés en regard des ouvertures supérieures 122 des conduits individuels 116B, 116D autorisant le flux riche en matériau solide à s'écouler depuis le volume intérieur 84 vers le deuxième bac 64B et vers le quatrième bac 64D à travers les entonnoirs 130, les conduites individuelles de distribution 116B, 116D et les vannes 126B, 126D.

En outre, comme représenté sur la Figure 5, les entonnoirs 130 masquent les ouvertures 122 des conduits de distribution individuels 116A, 116C des bacs 64A, 64C, ce qui empêche la circulation du flux riche en matériau solide depuis le volume 84 vers ces bacs 64C, 64C.

Les moyens de commande 68 comprennent des moyens de pilotage du barillet 118 entre sa première position et sa deuxième position, des moyens de commande des vannes 126A à 126D d'isolation de chaque conduit d'alimentation 116A à 116B, et des moyens de commande des vannes 110 de dépressurisation de chaque bac 64A à 64D.

Ils comprennent en outre, pour chaque bac 64A à 64D, une sonde 132 de mesure de la pression dans ce bac 64A à 64D, et une sonde 134 de mesure du niveau de matériau contenu dans ce bac 64A à 64D.

Les moyens de commande 68 sont propres à piloter le distributeur 66 entre une première configuration de distribution du flux riche en matériau solide dans les bacs 64A, 64C et de dépressurisation des bacs 64B, 64D et une deuxième configuration de distribution du flux riche en matériau solide dans les bacs 64B, 64D et de dépressurisation des bacs 64A, 64C.

Dans la première configuration, les moyens de commande 68 pilotent le barillet 118 pour le placer dans sa première position décrite plus haut. En outre, ils pilotent les vannes 126A, 126C des conduits individuels 116A, 116C pour les maintenir ouvertes, et les vannes d'obturation 110 des bacs 64A, 64C pour les maintenir fermées. La pression qui règne alors dans les espaces intérieur 105 des premier et troisième bacs 64A, 64C est sensiblement identique à la pression qui règne dans le volume intérieur 84 du caisson de réception 62.

En outre, les moyens de commande 68 pilotent les vannes 124B, 124D des conduits individuels 116B, 116D pour isoler le deuxième bac 64D et le quatrième bac 64B du distributeur 66 et du caisson 62. Ils sont propres à piloter aussi les vannes de dépressurisation 110 de ces bacs 64B, 64D pour dépressuriser progressivement le flux riche en matériau solide et l'évacuer depuis les bacs 64B, 64D vers la cuve 52.

Au contraire, dans la deuxième configuration, les moyens de commande 68 pilotent le barillet 118 pour le placer dans sa deuxième position décrite plus haut. En outre, ils pilote les vannes 126B, 126D des conduits individuels 116B, 116D pour les maintenir ouvertes, et les vannes d'obturation 110 des bacs 64B, 64D pour les maintenir fermées. La pression qui règne alors dans les espaces intérieurs 105 des deuxième et quatrième bacs 64B, 64D est sensiblement identique à la pression qui règne dans le volume intérieur 84 du caisson de réception 62.

En outre, les moyens de commande 68 pilotent les vannes 124A, 124C des conduits individuels 116A, 116C pour isoler le premier bac 64A et le troisième bac 64C du distributeur 66 et du caisson 62. Les moyens 68 sont propres à piloter aussi les vannes de dépressurisation 110 de ces bacs 64A, 64C pour dépressuriser progressivement le flux riche en matériau solide et l'évacuer depuis les premier et troisième bacs 64A, 64C vers la cuve 52.

Le procédé de fonctionnement du dispositif d'extraction 10 va maintenant être décrit.

Initialement, la conduite de transport 26 et l'ensemble de fond 22 sont descendus dans l'étendue d'eau 12 jusqu'à ce que les moyens de prélèvement 30 soient placés au contact du fond 14.

Les moyens de commande 56 activent alors les moyens de prélèvement 30 par l'intermédiaire des lignes 38 et les dirigent sur le fond 14 de l'étendue d'eau pour prélever du matériau solide.

Un flux de mélange formé par un mélange de matériau solide divisé et d'eau liquide est convoyé à travers le passage 34 de circulation dans le flexible 32 et dans la conduite de transport 26.

Pour entraîner le flux de mélange ainsi formé vers le haut, du gaz sous une pression comprise entre 10 bars et 100 bars provenant du compresseur 54 est injecté à travers la ligne d'injection de gaz 36 au point intermédiaire 40. Le flux de mélange forme alors un fluide sous pression contenant le matériau solide divisé, l'eau liquide et le gaz injecté.

Ce fluide sous pression remonte alors vers l'installation de surface 18 et entre en continu dans le volume intérieur 84 du bac 62 où il passe à travers le ralentisseur 60 situé en regard de l'entrée 86.

Le matériau solide divisé présent dans le fluide sous pression entre en contact avec des organes transversaux 99, ce qui diminue leur vitesse le long de l'axe horizontal A-A' d'injection dans le caisson pressurisé 62. Ainsi, le risque de détérioration du caisson 62 est diminué.

Dans le volume 84, le matériau solide est entraîné par gravité vers le bas, ce qui crée, en regard de la paroi inférieure 78, un flux riche en matériau solide, en regard de la paroi intermédiaire 80, un flux riche en eau liquide, et en regard de la paroi 82, un flux gazeux.

La sortie 88 étant munie de la grille de filtration 93, le flux riche en liquide est sensiblement purgé du matériau solide qu'il contient et est évacué continûment à travers la sortie aval 88 par l'intermédiaire du régulateur de pression 94 jusqu'à la source de liquide sous pression 96.

En variante, le flux liquide est dépressurisé et l'eau à pression atmosphérique est utilisée pour laver le matériau riche en solide extrait des bacs 64.

De même, le flux gazeux est évacué vers le haut par la sortie d'évacuation de gaz 90 de manière continue pour alimenter le compresseur à travers la conduite 98.

La pression qui règne dans le volume intérieur 84 défini par le caisson 62 est sensiblement égale à la pression du fluide, par exemple entre 8 bars et 15 bars. Le gaz évacué par la sortie supérieure 98 présente ainsi une pression supérieure à la pression atmosphérique, par exemple comprise entre 8 bars et 12 bars. Ainsi, la taille du compresseur 54 présent sur l'ensemble flottant peut être diminuée, ce qui limite son coût. De même, l'eau évacuée par la sortie aval 88 présente une pression comprise entre 6 bars et 10 bars.

Le distributeur 66 est alors piloté par les moyens de commande 68 pour qu'il occupe sa première configuration décrite plus haut.

Dans la première configuration, le flux riche en matériau solide s'écoule par gravité à travers la sortie d'évacuation inférieure 92, les entonnoirs 130 et les conduites individuelles de distribution 116A, 116C du premier bac 64A et du deuxième bac 64C pour remplir ces bacs 64A, 64C.

Simultanément, le deuxième bac 64B et le quatrième bac 64D sont vidangés pour évacuer leur contenu vers les cuves 52 en maintenant les vannes 126B, 126D d'isolation correspondantes obturées.

Lorsque la vidange des bacs 64B, 64D est terminée, les moyens de commande 68 obturent alors les vannes de dépressurisation 110 du deuxième bac 64B et du quatrième bac 64D et libèrent progressivement les vannes 126B, 126D d'isolation de ces bacs afin de ramener progressivement les espaces intérieurs 105 des bacs 64B, 64D à la pression qui règne dans le volume 84.

Lorsque les moyens de détection du niveau 134 détectent que les bacs 64A et 64C sont sensiblement pleins, le distributeur 66 est piloté par les moyens de commande 68 pour passer de sa première configuration de distribution à sa deuxième configuration de distribution.

Les vannes d'isolation 126A, 126C des bacs 64A, 64C sont alors obturées et le barillet 118 est pivoté de sa première position à sa deuxième position. Les vannes d'isolation 126B, 126D du deuxième bac 64D et du quatrième bac 64D sont alors ouvertes totalement pour recevoir le flux riche en matériau solide.

Simultanément, les vannes de dépressurisation 110 du premier bac 64A et du troisième bac 64C sont ouvertes progressivement pour évacuer le flux riche en matériau solide depuis chaque bac 64A, 64C vers la cuve 52 et le dépressuriser.

La pression qui règne alors dans les espaces intérieurs 105 des bacs 64A, 64C est inférieure à la pression qui règne dans le volume intérieur 84 du caisson de réception 62, et est sensiblement égale à la pression atmosphérique.

Puis, comme décrit précédemment, les vannes 110 de dépressurisation des bacs 64A, 64C sont fermées, et les vannes d'isolation 126A, 126C des bacs 64A, 64C sont ouvertes progressivement pour pressuriser progressivement les bacs 64A, 64C, la pression étant contrôlée par les sondes 132.

Le séparateur 50 autorise donc le traitement continu du fluide sous pression contenant du gaz, de l'eau liquide et du matériau solide convoyé par la conduite 24 en le maintenant sous pression dans le caisson 62.

Le séparateur 50 autorise en outre la dépressurisation du flux riche en matériau solide formé dans le caisson pressurisé 62. Cette dépressurisation est assurée de manière séquentielle dans les différents bacs de rétention 64A à 64D, sans avoir à dépressuriser le caisson de réception 62.

Il est donc possible, à l'aide du séparateur 50 selon l'invention, de recycler le flux gazeux et le flux liquide sous pression récupérés à la sortie du caisson pressurisé 62, pour les réutiliser dans le dispositif d'extraction 10, tout en récupérant le matériau solide à pression atmosphérique en vue de son stockage.

En variante, le distributeur 66 comprend des moyens de décolmatage de chaque entonnoir 30 du barillet 118 et/ou de chaque conduit individuel 116A à 116D. Ces moyens de décolmatage sont par exemple formés par des jets d'eau sous pression.

Dans une autre variante, le flux de mélange contenant du matériau solide et de l'eau est convoyé vers le haut dans le passage 34 de la conduite de transport 34 par injection de liquide sous pression dans le passage.

Dans ce cas, le liquide sous pression est produit au moins partiellement à partir du flux de liquide sous pression récupéré à la sortie aval 88 d'évacuation du caisson 62.

Dans une autre variante, les sorties 108 des bacs 64 débouchent en regard d'au moins un convoyeur à bande pour recevoir et déplacer le matériau solide récupéré vers un bord latéral de l'ensemble flottant et le charger sur une barge de transport disposée en regard du bord latéral.

## Revendications

1. Séparateur (50) destiné à recevoir en continu un fluide sous pression comprenant un gaz sous pression, le fluide sous pression contenant au moins un matériau solide divisé et un liquide, le séparateur (50) étant du type comprenant :
- un caisson pressurisé (62) de séparation du fluide sous pression en un flux pressurisé riche en matériau solide, et en au moins un flux pressurisé pauvre en matériau solide, le caisson pressurisé (62) comprenant une entrée (86) d'injection de fluide sous pression, une sortie inférieure (92) d'évacuation du flux pressurisé riche en matériau solide,
le séparateur (50) comprenant :
- au moins un premier et un deuxième bac (64A, 64B) de dépressurisation du flux pressurisé riche en matériau solide, chaque bac (64A, 64B) délimitant un espace intérieur fermé débouchant par une entrée (106) d'introduction du flux pressurisé riche en matériau solide et par une sortie (108) de dépressurisation, munie d'une vanne de dépressurisation (110) ;
- un distributeur (66), raccordant la sortie inférieure (92) d'évacuation du caisson (62) et l'entrée d'introduction (106) de chaque bac de dépressurisation (64),
le distributeur (66) étant pilotable entre une première configuration de distribution du flux pressurisé riche en matériau solide vers au moins le premier bac (64A) et de dépressurisation d'au moins le deuxième bac (64B), dans laquelle le premier bac (64A) est raccordé au caisson pressurisé (62), et le deuxième bac (64B) est isolé du caisson pressurisé (62), et une deuxième configuration de distribution du flux pressurisé riche en matériau solide vers au moins le deuxième bac (64B) et de dépressurisation d'au moins le premier bac (64A), dans laquelle le deuxième bac (64B) est raccordé au caisson pressurisé (62) et le premier bac (64A) est isolé du caisson pressurisé (62), **caractérisé en ce que** le caisson pressurisé comporte au moins une sortie aval (88) d'évacuation d'un flux pressurisé pauvre en matériau solide, le caisson pressurisé (62) comprenant une sortie supérieure (90) d'évacuation d'un flux riche en gaz sous pression.

2. Séparateur (50) selon la revendication 1, **caractérisé en ce que** le distributeur (66) comprend une vanne d'isolation (116A) du premier bac (64A) et une vanne d'isolation (116B) du deuxième bac (64B),
et **en ce que** le séparateur (50) comprend des moyens (62) de commande propres à piloter le distributeur (66) de sorte que, dans la première configuration, la vanne d'isolation (116B) du deuxième bac (64B) est fermée, la vanne d'isolation (116A) du premier bac (64A) est ouverte, et la vanne de dépressurisation (110) du premier bac (64A) est fermée,
et de sorte que dans la deuxième configuration, la vanne d'isolation (1168) du deuxième bac (64B) est ouverte, la vanne d'isolation (116A) du premier bac (64A) est fermée, et la vanne de dépressurisation (110) du premier bac (64A) est propre à être ouverte.

3. Séparateur (50) selon l'une quelconque des revendications précédentes, **caractérisé en ce que** le distributeur (66) comprend un barillet (118) mobile présentant au moins un canal (131) de distribution débouchant en amont en regard de la sortie inférieure (92) d'évacuation du flux riche en matériau solide, le barillet (118) étant mobile par rapport au premier bac (64A) et au deuxième bac (64B) entre une première position dans la première configuration du distributeur (66), dans laquelle le canal de distribution (131) est raccordé en aval au premier bac (64A) et est isolé du deuxième bac (64B) et une deuxième position dans la deuxième configuration du distributeur (66), dans laquelle le canal de distribution (131) est raccordé en aval au deuxième bac (64B) et est isolé du premier bac (64A).

4. Séparateur (50) selon la revendication 3 **caractérisé en ce que** le barillet est monté mobile en rotation autour d'un axe sensiblement vertical.

5. Séparateur (50) selon l'une quelconque des revendications précédentes, **caractérisé en ce que** le caisson pressurisé (62) est placé au-dessus de chaque bac de dépressurisation (64A, 64B), le distributeur (66) étant interposé entre le caisson pressurisé (62) et chaque bac (64A, 64B).

6. Séparateur (50) selon l'une quelconque des revendications précédentes, **caractérisé en ce qu'**il comprend au moins un troisième bac de dépressurisation (64C) et au moins un quatrième bac de dépressurisation (64D), le distributeur (66) raccordant dans sa première configuration le caisson pressurisé au premier bac (64A) et au troisième bac (64C), et raccordant dans sa deuxième configuration le caisson pressurisé (92) au deuxième bac (64B) et au quatrième bac (64D).

7. Séparateur (50) selon l'une quelconque des revendications précédentes, **caractérisé en ce qu'**il comprend des moyens (60) de réduction de la vitesse du matériau solide comprenant des organes (72) de ralentissement disposés en regard de l'entrée d'injection (86) du fluide sous pression dans le caisson pressurisé (92) et faisant saillie transversalement par rapport à un axe de circulation (A-A') du fluide sous pression dans l'entrée d'injection (86).

8. Dispositif (10) d'extraction d'un matériau situé au fond (14) d'une étendue d'eau (12), **caractérisé en ce qu'**il comprend :
- une installation de surface (18) disposée au moins partiellement au dessus de la surface (16) de l'étendue d'eau (12);
- un ensemble de fond (20) comprenant des moyens (30) de prélèvement du matériau sur le fond (14) de l'étendue d'eau (12) ;
- une conduite (24) de transport raccordant l'ensemble de fond (20) à l'installation de surface (18) ; et
- un séparateur (50) selon l'une quelconque des revendications précédentes, monté sur l'installation de surface (18) et raccordé à la conduite de transport (24).

9. Dispositif (10) selon la revendication 8, **caractérisé en ce que** l'installation de surface (18) comprend au moins un compresseur (54) raccordé en sortie à une ligne d'injection (36) de fluide sous pression dans la conduite de transport (24), la sortie d'évacuation (90) du flux pressurisé pauvre en matériau solide étant raccordée à une entrée du compresseur (54).

10. Procédé de séparation en continu d'un fluide sous pression à l'aide d'un séparateur (50) selon l'une quelconque des revendications 1 à 7, le procédé comprenant l'injection en continu du fluide sous pression dans le caisson pressurisé (62) par l'entrée (86) d'injection de fluide sous pression, et la formation dans le caisson pressurisé (92) d'un flux riche en matériau solide et d'au moins un flux pauvre en matériau solide, le procédé comprenant séquentiellement :
- une pluralité de phases de distribution du flux riche en matériau solide dans au moins le premier bac de dépressurisation (64A), dans lesquelles le distributeur (66) occupe sa première configuration, la pression régnant dans le premier bac (64A) étant sensiblement égale à la pression régnant dans le caisson pressurisé (92) ;
- une pluralité de phases de dépressurisation du premier bac (64A), dans lesquelles le distributeur (66) occupe sa deuxième configuration, la pression régnant dans le premier bac (64A) étant inférieure à la pression régnant dans le caisson pressurisé (92) et dans le deuxième bac (64B), le flux riche en matériau solide étant distribué dans le deuxième bac (64B)
le procédé comprenant l'évacuation d'un flux riche en gaz sous pression par la sortie supérieure (90).

## Patentansprüche

1. Trennvorrichtung (50), welche dazu bestimmt ist, ein unter Druck stehendes Fluid, welches ein unter Druck stehendes Gas aufweist, kontinuierlich aufzunehmen, wobei das unter Druck stehende Fluid wenigstens ein abgespaltetes Festmaterial und eine Flüssigkeit aufweist, wobei die Trennvorrichtung (50) vom Typ ist, welcher aufweist:
- einen druckbeaufschlagten Tank (62) zur Trennung des unter Druck stehenden Fluids in einen druckbeaufschlagten, festmaterialreichen Strom und in wenigstens einen druckbeaufschlagten, festmaterialarmen Strom, wobei der druckbeaufschlagte Tank (62) einen Einlass (86) zur Einspeisung des unter Druck stehenden Fluids, einen unteren Auslass (92) zum Auslassen des druckbeaufschlagten, festmaterialreichen Stroms aufweist,
wobei die Trennvorrichtung (50) aufweist:
- wenigstens einen ersten und einen zweiten Behälter (64A, 64B) zur Druckabsenkung des druckbeaufschlagten, festmaterialreichen Stroms, wobei jeder Behälter (64A, 64B) einen geschlossenen Innenraum begrenzt, welcher über einen Eingang (106) zum Einführen des druckbeaufschlagten, festmaterialreichen Stroms und über einen Auslass (108) zur Druckabsenkung, welcher mit einem Ventil (110) zur Druckabsenkung versehen ist, ausmündet,
- einen Verteiler (66), welcher den unteren Auslass (92) zum Auslassen des Tanks (62) und den Einlass zum Einführen (106) jedes Behälters zur Druckabsenkung (64) verbindet,
wobei der Verteiler (66) steuerbar ist zwischen einer ersten Konfiguration des Ausgebens des druckbeaufschlagten, festmaterialreichen Stroms in Richtung zu mindestens dem ersten Behälter (64A) und der Druckabsenkung von wenigstens dem zweiten Behälter (64B), bei welcher der erste Behälter (64A) mit dem druckbeaufschlagten Tank (62) verbunden ist und der zweite Behälter (64B) von dem druckbeaufschlagten Tank (62) abgetrennt ist, und einer zweiten Konfiguration des Ausgebens des druckbeaufschlagten, festmaterialreichen Stroms in Richtung zu mindestens dem zweiten Behälter (64B) und der Druckabsenkung von wenigstens dem ersten Behälter (64A), bei welcher der zweite Behälter (64B) mit dem druckbeaufschlagten Tank (62) verbunden ist und der erste Behälter (64A) von dem druckbeaufschlagten Tank (62) abgetrennt ist, **gekennzeichnet dadurch, dass** der druckbeaufschlagte Tank (62) wenigstens einen stromabwärtsseitigen Auslass (88) zum Auslassen eines druckbeaufschlagten, feststoffarmen Stroms aufweist, wobei der druckbeaufschlagte Tank (62) aufweist einen oberen Auslass (90) zum Auslassen eines Stroms, welcher reich an unter Druck stehendem Gas ist.

2. Trennvorrichtung (50) gemäß Anspruch 1, **gekennzeichnet dadurch, dass** der Verteiler (66) ein Ventil zum Absperren (116A) des ersten Behälters (64A) und ein Ventil zum Absperren (116B) des zweiten Behälters (64B) aufweist,
und dadurch, dass die Trennvorrichtung (50) Mittel (62) zum Steuern aufweist, welche dazu geeignet sind, den Verteiler (66) derart zu steuern, dass in der ersten Konfiguration das Ventil zum Absperren (116B) des zweiten Behälters (64B) geschlossen ist, das Ventil zum Absperren (116A) des ersten Behälters (64A) geöffnet ist und das Ventil zur Druckabsenkung (110) des ersten Behälters (64A) geschlossen ist,
und derart, dass in der zweiten Konfiguration das Ventil zum Absperren (116B) des zweiten Behälters (64B) geöffnet ist, das Ventil zum Absperren (116A) des ersten Behälters (64A) geschlossen ist und das Ventil zur Druckabsenkung (110) des ersten Behälters (64A) dazu geeignet ist, geöffnet zu sein.

3. Trennvorrichtung (50) gemäß irgendeinem der vorhergehenden Ansprüche, **gekennzeichnet dadurch, dass** der Verteiler (66) eine bewegbare Trommel (118) aufweist, welche wenigstens einen Kanal (131) zur Verteilung aufweist, welcher dem unteren Auslass (92) zum Auslassen des feststoffreichen Stroms gegenüberliegend stromaufwärts ausmündet, wobei die Trommel (118) bezüglich des ersten Behälters (64A) und des zweiten Behälters (64B) bewegbar ist zwischen einer ersten Stellung in der ersten Konfiguration des Verteilers (66), in welcher der Kanal zur Verteilung (131) stromabwärts mit dem ersten Behälter (64A) verbunden ist und von dem zweiten Behälter (64B) getrennt ist, und einer zweiten Stellung in der zweiten Konfiguration des Verteilers (66), in welcher der Kanal zur Verteilung (131) stromabwärts mit dem zweiten Behälter (64B) verbunden ist und von dem ersten Behälter (64A) getrennt ist.

4. Trennvorrichtung (50) gemäß dem Anspruch 3, **gekennzeichnet dadurch, dass** die Trommel um eine im Wesentlichen vertikale Achse drehbewegbar montiert ist.

5. Trennvorrichtung (50) gemäß irgendeinem der vorhergehenden Ansprüche, **gekennzeichnet dadurch, dass** der druckbeaufschlagte Tank (62) oberhalb von jedem Behälter zur Druckabsenkung (64A, 64B) angeordnet ist, wobei der Verteiler (66) zwischen dem druckbeaufschlagten Tank (62) und jedem Behälter (64A, 64B) angeordnet ist.

6. Trennvorrichtung (50) gemäß irgendeinem der vorhergehenden Ansprüche, **gekennzeichnet dadurch, dass** sie wenigstens einen dritten Behälter zur Druckabsenkung (64C) und wenigstens einen vierten Behälter zur Druckabsenkung (64D) aufweist, wobei der Verteiler (66) in seiner ersten Konfiguration den druckbeaufschlagten Tank (62) mit dem ersten Behälter (64A) und mit dem dritten Behälter (64C) verbindet und seiner zweiten Konfiguration den druckbeaufschlagten Tank (62) mit dem zweiten Behälter (64B) und mit dem vierten Behälter (64D) verbindet.

7. Trennvorrichtung (50) gemäß irgendeinem der vorhergehenden Ansprüche, **gekennzeichnet dadurch, dass** sie Mittel (60) zur Verringerung der Geschwindigkeit des Festmaterials aufweist, welche Organe (72) zur Verlangsamung aufweisen, welche dem Einlass zum Einspeisen (86) des unter Druck stehenden Fluids gegenüberliegend in dem druckbeaufschlagten Tank (62) angeordnet sind und bezüglich einer Achse der Zirkulation (A-A') des unter Druck stehenden Fluids in dem Einlass zum Einspeisen (86) quer hervorstehen.

8. Vorrichtung (10) zur Extraktion eines Materials, welches sich an einem Boden eines Gewässers (12) befindet, **gekennzeichnet dadurch, dass** sie aufweist:
- eine Oberfläche-Einrichtung (18), welches wenigstens teilweise oberhalb der Oberfläche (14) des Gewässers (12) angeordnet ist,
eine Boden-Einrichtung (20), welche Mittel (30) zum Entnehmen von Material aus dem Boden (14) des Gewässers (12) aufweist,
eine Leitung (24) zum Transport, welche die Boden-Einrichtung (20) mit der Oberfläche-Einrichtung (18) verbindet, und
eine Trennvorrichtung (50) gemäß irgendeinem der vorhergehenden Ansprüche, welche an der Oberfläche-Einrichtung (18) montiert ist und mit der Leitung zum Transport (24) verbunden ist.

9. Vorrichtung (10) gemäß dem Anspruch 8, **gekennzeichnet dadurch, dass** die Oberfläche-Einrichtung (18) wenigstens einen Verdichter (54) aufweist, welcher ausgangsseitig mit einer Leitung zur Einspeisung (36) des unter Druck stehenden Fluids in die Leitung zum Transport (24) verbunden ist, wobei der Auslass zum Auslassen (90) des druckbeaufschlagten, festmaterialarmen Stroms mit einem Eingang des Verdichters (54) verbunden ist.

10. Verfahren zur kontinuierlichen Trennung eines unter Druck stehenden Fluids mit Hilfe einer Trennvorrichtung (50) gemäß irgendeinem der Ansprüche 1 bis 7, wobei das Verfahren aufweist das kontinuierliche Einspeisen des unter Druck stehenden Fluids in den druckbeaufschlagten Tank (62) durch den Einlass (86) zum Einspeisen des unter Druck stehenden Fluids, und das Ausbilden eines festmaterialreichen Stroms und wenigstens eines festmaterialarmen Stroms in dem druckbeaufschlagten Tank (92),
wobei das Verfahren sequentiell aufweist:
- eine Mehrzahl von Phasen des Ausgebens des festmaterialreichen Stroms in wenigstens an wenigstens den ersten Behälter zur Druckabsenkung (64A), bei welchen der Verteiler (66) seine erste Konfiguration einnimmt, wobei der Druck, welcher in dem ersten Behälter (64A) herrscht, im Wesentlichen gleich dem Druck ist, welcher in dem druckbeaufschlagten Tank (92) herrscht,
- eine Mehrzahl von Phasen der Druckabsenkung des ersten Behälters (64A), bei welchen der Verteiler (66) seine zweite Konfiguration einnimmt, wobei der Druck, welcher in dem ersten Behälter (64A) herrscht, kleiner als der Druck ist, welcher in dem druckbeaufschlagten Tank (92) und in dem zweiten Behälter (64B) herrscht, wobei der festmaterialreiche Strom in den zweiten Behälter (64B) ausgegeben wird,
wobei das Verfahren aufweist das Auslassen eines Stroms, welcher reich an unter Druck stehendem Gas ist, durch den oberen Auslass (90).

## Claims

1. A separator (50) for continuously receiving a pressurized fluid comprising a pressurized gas, the pressurized fluid containing at least one divided solid material and one liquid, the separator (50) being of the type comprising:
- a pressurized vessel (62) for separating the pressurized fluid into a flow rich in solid material, and into at least one pressurized flow poor in solid material, the pressurized vessel (62) comprising a pressurized fluid injection inlet (86), a lower discharge outlet (92) for the pressurized flow rich in solid material,
the separator (50) comprising:
- at least one first and one second tank (64A, 64B) for depressurizing a pressurized flow rich in solid material, each tank (64A, 64B) defining a closed inner space emerging through an inlet (106) for introducing the pressurized flow rich in solid material and through a depressurization outlet (108), provided with a depressurization valve (110);
- a distribution manifold (66), connecting the lower discharge outlet (92) of the vessel (62) and the introduction inlet (106) of each depressurization tank (64),
the distribution manifold (66) being movable between a first configuration for distributing the pressurized flow rich in solid material to at least the first tank (64A) and depressurizing at least the second tank (64B), in which the first tank (64A) is connected to the pressurized vessel (62), and the second tank (64B) is isolated from the pressurized vessel (62), and a second configuration for distributing the pressurized flow rich in solid material toward at least the second tank (64B) and depressurizing at least the first tank (64A), in which the second tank (64B) is connected to the pressurized vessel (62) and the first tank (64A) is isolated from the pressurized vessel (62), **characterized in that** the pressurized vessel comprises at least one discharge outlet (88, 90) of the or each pressurized flow poor in solid material,
the pressurized vessel (62) comprising an upper outlet (90) for discharging a flow rich in pressurized gas.

2. The separator (50) according to claim 1, **characterized in that** the distribution manifold (66) comprises an isolation valve (116A) of the first tank (64A) and an isolation valve (116B) of the second tank (64B),
and **in that** the separator (50) comprises control means (62) capable of moving the distribution manifold (66) such that, in the first configuration, the isolation valve (116B) of the second tank (64B) is closed, the isolation valve (116A) of the first tank (64A) is open, and the depressurization valve (110) of the first tank (64A) is closed,
and such that in the second configuration, the isolation valve (116B) of the second tank (64B) is open, the isolation valve (116A) of the first tank (64A) is closed, and the depressurization valve (110) of the first tank (64A) can be opened.

3. The separator (50) according to any one of the preceding claims, **characterized in that** the distribution manifold (66) comprises a moving cylinder (118) having at least one distribution channel (131) emerging upstream opposite the lower outlet (92) for discharging the fluid rich in solid material, the cylinder (118) being able to move in relation to the first tank (64A) and the second tank (64B) between a first position in the first configuration of the distribution manifold (66), in which the distribution channel (131) is connected downstream of the first tank (64A) and is isolated from the second tank (64B), and a second position in the second configuration of the distribution manifold (66), in which the distribution channel (131) is connected downstream of the second tank (64B) and is isolated from the first tank (64A).

4. The separator (50) according to claim 3, **characterized in that** the cylinder is mounted rotatably mobile around a substantially vertical axis.

5. The separator (50) according to any one of the preceding claims, **characterized in that** the pressurized vessel (62) is placed above each depressurization tank (64A, 64B), the distribution manifold (66) being inserted between the pressurized vessel (62) and each tank (64A, 64B).

6. The separator (50) according to any one of the preceding claims, **characterized in that** it comprises at least a third depressurization tank (64C) and at least a fourth depressurization tank (64D), the distribution manifold (66) connecting, in its first configuration, the pressurized vessel to the first tank (64A) and to the third tank (64C), and in its second configuration connecting the pressurized vessel (92) to the second tank (64B) and to the fourth tank (64D).

7. The separator (50) according to any one of the preceding claims, **characterized in that** it comprises means (60) for reducing the speed of the solid material comprising deceleration members (72) arranged opposite the injection inlet (86) of the pressurized fluid into the pressurized vessel (92) and protruding transversely in relation to an axis of circulation (A-A') of the pressurized fluid in the injection inlet (86).

8. A device (10) for extracting a material situated at the bottom (14) of an expanse of water (12), **characterized in that** it comprises:
- a surface equipment (18) at least partially arranged above the surface (16) of the expanse of water (12);
- a bottom assembly (20) comprising means (30) for withdrawing material on the bottom (14) of the expanse of water (12);
- a transport pipe (24) connecting the bottom assembly (20) to the surface equipment (18); and
- a separator (50) as defined in any one of the preceding claims, mounted on the surface equipment (18) and connected to the transport pipe (24).

9. The device (10) according to claim 8, **characterized in that** the surface equipment (18) comprises at least one compressor (54) connected as outlet to a line (36) for injecting pressurized fluid into the transport pipe (24), the discharge outlet (90) for the pressurized fluid poor in solid material being connected to an inlet of the compressor (54).

10. A method for continuous separation of a pressurized fluid using a separator (50) according to any one of claims 1 to 7, the method comprising the continuous injection of the pressurized fluid into the pressurized vessel (62) through the pressurized fluid injection inlet (86), and the formation in the pressurized vessel (92) of a flow rich in solid material and at least one flow poor in solid material,
the method comprising, sequentially:
- a plurality of distribution phases of the flow rich in solid material into at least the first depressurization tank (64A), in which the distribution manifold (66) occupies its first configuration, the pressure prevailing in the first tank (64A) being substantially equal to the pressure prevailing in the pressurized vessel (92);
- a plurality of depressurization phases of the first tank (64A), in which the distribution manifold (66) occupies its second configuration, the pressure prevailing in the first tank (64A) being lower than the pressure prevailing in the pressurized vessel (92) and in the second tank (64B), the flow rich in solid material being distributed in the second tank (64B)
the method comprising discharging a flow rich in pressurized gas through the upper outlet (90).
